# FASCICULE DE BREVET EUROPEEN

(11) **EP 0 733 302 B1**
(45) Date de publication et mention de la délivrance du brevet: **22.09.1999**
(21) Numéro de dépôt: 96440024.6
(22) Date de dépôt: 08.03.1996
(51) Int. Cl.: A01D 78/10

(54) **Machine de fenaison**
Heuwerbungsmaschine
Haymaking machine

(30) Priorité: 20.03.1995 FR 9503453
(43) Date de publication de la demande: 25.09.1996
(73) Titulaire: KUHN S.A., F-67700 Saverne (FR)
(72) Inventeur: Aron, Jérôme, 67330 Dossenheim sur Zinsel (FR); Troesch, Martial, 67440 Schwenheim (FR)
(74) Mandataire: Andres, Jean-Claude

(56) Documents cités:
- EP-A- 0 203 023
- EP-A- 0 580 065
- EP-A- 0 654 209
- DE-A- 2 419 749
- DE-U- 8 807 510
- FR-A- 2 693 346

## Description

La présente invention se rapporte à une machine de fenaison, notamment une faneuse de végétaux, qui peut être accouplée à un tracteur et qui comporte un châssis support de forme allongée, se composant d'une partie centrale et de deux parties latérales qui sont articulées aux extrémités de ladite partie centrale au moyen de pivots autour desquels elles peuvent être déplacées en hauteur d'un angle d'environ 90° pour le transport, lequel châssis porte plusieurs rotors se situant sous la partie centrale et les parties latérales et pouvant être entraînés en rotation durant le travail autour d'axes supports qui portent à leurs extrémités inférieures des roues d'appui au sol, chacune desdites parties latérales étant réalisée en un segment intérieur et un segment extérieur qui porte le rotor correspondant et qui peut tourner autour de son axe longitudinal par rapport au segment intérieur pour amener ledit rotor sensiblement au-dessus de la partie centrale avec les fourches de travail orientées vers le milieu de la machine, lorsque lesdites parties latérales sont déplacées en hauteur pour le transport.

Une machine de ce genre est connue dans le brevet européen n° 0203 023. Sur cette machine les fourches de travail des rotors qui sont relevés durant le transport, ne sont pas dangereuses pour les personnes, les animaux ou les véhicules qui peuvent se trouver ou passer à proximité. Cette machine ne peut cependant être utilisée que dans une seule position de travail. Dans cette position le châssis avec les rotors est sensiblement perpendiculaire au sens d'avancement. Les rotors projettent alors le fourrage droit vers l'arrière, de sorte qu'il reste sensiblement sur la même bande de terrain. Or, lorsqu'un terrain est bordé par un chemin, un fossé ou une barrière, il est très important de pouvoir en éloigner le fourrage lors du fanage.

La présente invention a pour but de proposer une machine de fenaison avec des rotors extérieurs orientables vers le milieu de la machine au transport et qui peut facilement être transposée dans une autre position de travail dans laquelle ses rotors déplacent le fourrage en oblique pour l'éloigner du bord d'un terrain.

A cet effet, une importante caractéristique de l'invention consiste en ce que les axes supports des rotors sont montés pivotants dans des paliers du châssis de la machine, que lesdits axes supports comportent des leviers de réglage qui sont reliés entre-eux au moyen de tiges de commmande et que les tiges de commande des leviers de réglage des axes supports des deux rotors des parties latérales sont réalisées en un premier tronçon et un second tronçon qui sont munis de moyens d'accouplement et de désaccouplement.

Il est ainsi possible de faire pivoter ensemble les axes supports des rotors dans leurs paliers de manière à modifier l'orientation des roulettes d'appui au sol. Au travail celles-ci se placent automatiquement dans la direction d'avancement et déplacent le bâti avec les rotors dans une position oblique par rapport à ladite direction. Les rotors projettent alors le fourrage en biais de sorte qu'il subisse un déplacement latéral. D'autre part, lors de la mise en position de transport, le segment extérieur de chaque partie latérale du bâti peut tourner avec le second tronçon de la tige de commande correspondante d'un angle d'environ 180° pour amener le rotor sensiblement au-dessus de la partie centrale. Les moyens d'accouplement et de désaccouplement qui sont prévus sur les deux tronçons de chaque tige de commande permettent de les séparer l'un de l'autre.

Inversement, pour le retour dans la position de travail le segment extérieur de chaque partie latérale est pivoté d'un angle d'environ 180° en sens contraire. Les deux tronçons de la tige de commande s'accouplent alors automatiquement de manière à pouvoir régler à nouveau la position de l'axe support et de la roulette du rotor correspondant.

D'autres caractéristiques et avantages de l'invention ressortiront de la description ci-après d'exemples de réalisation non limitatifs de l'invention, avec référence aux dessins annexés dans lesquels :
- La figure 1 représente une vue arrière d'une machine selon l'invention dans une première position de travail.
- La figure 2 représente une vue de dessus de cette machine.
- La figure 3 représente une vue de dessus de la machine dans une deuxième position de travail.
- La figure 4 représente une vue arrière de la machine en position de transport ou de dépose.
- La figure 5 représente une vue de côté de la machine selon la figure 4.
- La figure 6 représente une vue de dessus d'une machine selon un autre exemple de réalisation.

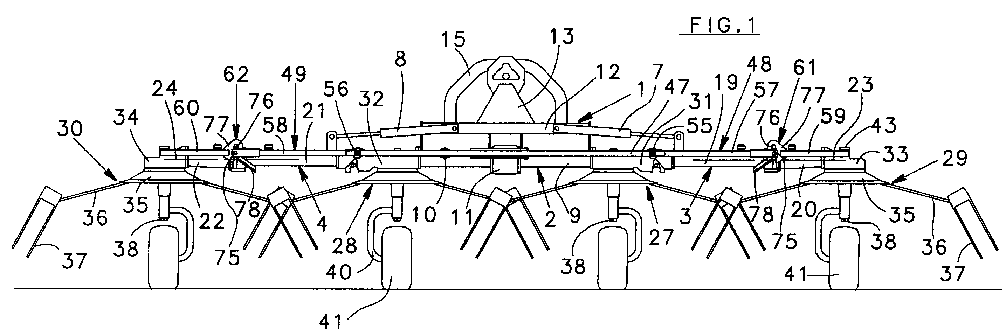

Tel que cela ressort des figures 1 à 5, la machine selon l'invention comporte un châssis support (1) de forme allongée. Ce châssis (1) se compose d'une partie centrale (2) et de deux parties latérales (3 et 4) qui sont articulées aux extrémitées de ladite partie centrale au moyen de pivots (5 et 6) sensiblement horizontaux. Des vérins hydrauliques (7 et 8) sont articulés sur la partie centrale (2) et chaque partie latérale (3 et 4).

La partie centrale (2) est essentiellement formée de deux tubes (9 et 10) liés à un carter central (11) et d'un longeron (12) qui est sensiblement parallèle auxdits tubes. Une poutre de liaison (13) qui s'étend perpendiculairement au châssis (1) est reliée au longeron (12). Sur l'extrémité avant de cette poutre (13) est articulé, au moyen d'un axe (14) sensiblement vertical, un chevalet d'accouplement (15). Ce chevalet (15) est muni de trois points d'accouplement (16, 17 et 18) servant à fixer la machine au dispositif d'attelage trois points d'un tracteur non représenté.

Chaque partie latérale (3, 4) du châssis (1) se compose de deux segments (19 et 20, 21 et 22) de tubes. Les segments extérieurs (20, 22) sont montés sur les extrémités des segments intérieurs (19, 21) de manière à pouvoir tourner autour de leurs axes longitudinaux géométriques (23, 24). Lesdits segments intérieurs (19, 21) comportent des verrous (25, 26) permettant de bloquer les segments extérieurs (20, 22) dans au moins deux positions différentes.

Dans l'exemple représenté, la partie centrale (2) du châssis (1) porte deux rotors (27, 28) tandis que le segment extérieur (20, 22) de chaque partie latérale (3 , 4) porte un rotor (29, 30) à son extrémité la plus éloignée. Ces rotors (27 à 30) se situent directement sous des carters (31 à 34) de la partie centrale (2) et des parties latérales (3, 4) du châssis (1). Ils sont tous sensiblement identiques. Chacun est constitué par un moyeu (35) auquel sont fixés plusieurs bras (36) portant des fourches de travail (37) à leurs extrémités extérieures. Chaque moyeu (35) est monté de manière à pouvoir tourner sur un axe support (38) qui est sensiblement vertical ou incliné dans la direction d'avancement (A). Chacun de ces axes (38) porte à son extrémité inférieure un bras (39) avec une colonne (40) munie d'une roue d'appui (41) qui roule sur le sol durant le travail.

Lesdits rotors (27 à 30) peuvent être entraînés en rotation autour de leurs axes supports (38) à partir de l'arbre de prise de force du tracteur. A cet effet, chaque moyeu (35) comporte une couronne dentée avec laquelle engrène un pignon d'entraînement situé dans le carter (31 à 34) correspondant. Ces pignons d'entraînement sont montés sur des arbres de transmissions qui sont logés dans la partie centrale (2) et les parties latérales (3, 4) du châssis (1). Ces arbres sont reliés entre eux au moyen d'accouplements du type à doigts ou à cardans situés au niveau des pivots (5 et 6). L'arbre de transmission situé dans la partie centrale (2) passe dans le carter (11). Dans ce carter (11) il porte un pignon qui engrène avec un autre pignon solidaire d'un arbre (42) qui s'étend en direction du tracteur et qui peut être relié à l'arbre de prise de force de celui-ci au moyen d'un arbre de transmission intermédiaire.

Les axes supports (38) des rotors (27 à 30) sont montés pivotants dans des paliers de guidage prévus dans les carters (31 à 34) du châssis (1). Lesdits axes (38) traversent les parois supérieures des carters (31 à 34). Ils portent à leurs extrémités situées au-dessus de ces carters (31 à 34) des leviers de réglage (43 à 46) sensiblement horizontaux . Ces leviers (43 à 46) pourraient également sortir latéralement des carters (31 à 34). Ils sont tous reliés à des tiges de commande (47, 48, 49) situées derrière le châssis (1) au moyen d'axes d'articulation (50 à 53). Une première tige (47) est parallèle à la partie centrale (2) du châssis (1). Elle peut être déplacée longitudinalement au moyen d'un vérin hydraulique (54) qui est fixé sur ladite tige (47) et sur la partie centrale (2). Les tiges de commande (48 et 49) des axes supports (38) des rotors (29 et 30) des deux parties latérales (3 et 4) sont articulées aux extrémités de la première tige (47) au moyen d'axes (55 et 56) qui sont parallèles aux pivots (5 et 6) du châssis (1). Chacune de ces tiges de commande (48 et 49) est réalisée en un premier tronçon (57, 58) et un second tronçon (59, 60) qui sont munis de moyens (61, 62) d'accouplement et de désaccouplement.

Chacun des premiers tronçons (57, 58) est atticulé sur la première tige de commande (47) par l'axe (55, 56) et sur un levier de guidage (63, 64) au moyen d'un axe (65, 66) sensiblement vertical. Ce levier de guidage (63, 64) est lui-même articulé sur le segment intérieur (19, 21) de la partie latérale (3, 4) correspondante au moyen d'un axe (67, 68) sensiblement vertical. Chaque second tronçon (59, 60) est articulé, d'une part, sur le levier de réglage (43, 46) de l'axe support (38) du rotor (29, 30) de la partie latérale (3, 4) correspondante au moyen de l'axe (50, 53) sensiblement vertical et d'autre part, sur un levier de guidage (69, 70) également au moyen d'un axe (71, 72) sensiblement vertical. Ce levier de guidage (69, 70) est lui même articulé au moyen d'un axe (73, 74) sensiblement vertical sur le segment extérieur (20, 22) de la partie latérale (3, 4) correspondante du châssis (1).

Il ressort des figures annexées que les moyens (61, 62) d'accouplement et de désaccouplement des tronçons (57 à 60) des tiges de commande (48 et 49) des axes supports (38) des rotors (29 et 30) des deux parties latérales (3 et 4) sont constitués par des axes d'accrochage (75) et des encoches (76). Chacun desdits axes d'accrochage (75) est fixé à l'extrémité dirigé vers l'extérieur du premier tronçon (57, 58) de chaque tiges de commande (48, 49). Ces axes (75) sont dirigés dans la direction d'avancement (A). Chacune des encoches (76) se situe dans une plaque (77) qui est solidaire du second tronçon (59, 60) de chaque tige de commande (48, 49). Ces encoches (76) sont en forme de V. Au moins un des bords de ces encoches (76) est prolongé et constitue une rampe de guidage (78).

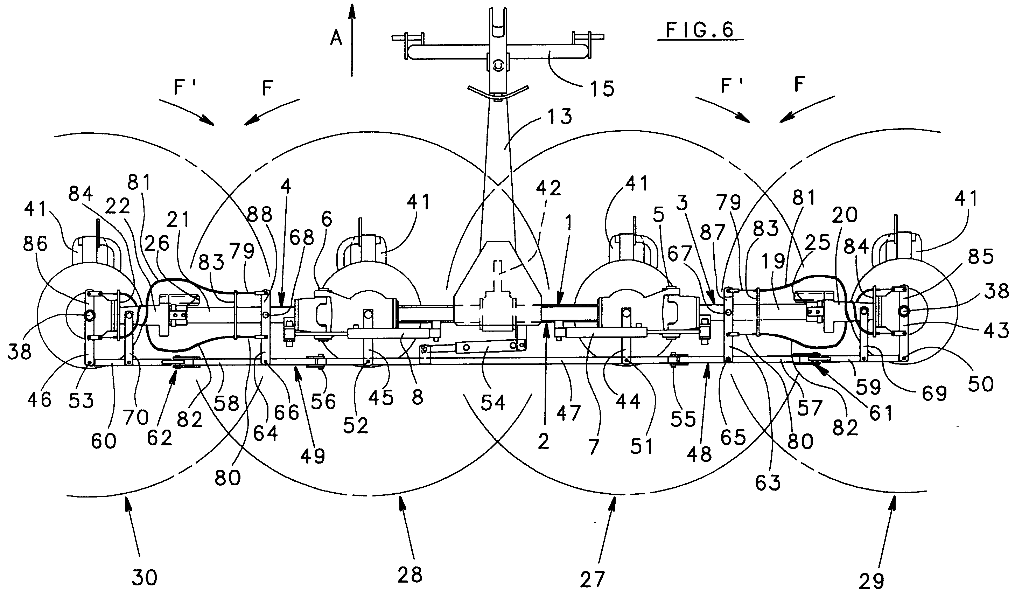

La machine selon l'exemple de réalisation de la figure 6 a une configuration générale analogue à celle des figures 1 à 5 et ne sera donc plus décrite en détails. Sur cette machine le levier de réglage (43, 46) de l'axe support (38) du rotor (29, 30) de chaque partie latérale (3, 4) du châssis (1) et le levier de guidage (63, 64) du premier tronçon (57, 58) de chaque tige de commande (48, 49) sont reliés entre eux par des câbles (79 et 80). Ceux-ci sont disposés dans des gaines de guidage (81 et 82) qui sont fixées à chacune de leurs extrémités sur des plaques (83 et 84) dont l'une est solidaire du segment intérieur (19, 21) et l'autre du segment extérieur (20, 22) de la partie latérale (3 ou 4) correspondante. Sur chaque partie latérale (3, 4), un (80) des câbles (79 et 80) est fixé au levier de réglage (43, 46) et au levier de guidage (63, 70) dans leurs parties qui se situent entre leurs axes (38 et 67, 68) respectifs et leurs axes d'articulation (50, 53 et 65, 66) sur les tronçons (57 à 60). Les points de fixation dudit câble (80) sur les deux leviers (43, 46 et 63, 64) se situent derrière lesdits axes (38 et 67, 68) (vu dans la direction d'avancement A) et sensiblement à la même distance de ceux-ci. L'autre câble (79) est fixé sur des prolongements (85, 86 et 87, 88) des leviers (43, 46 et 63, 64). Ces prolongements s'étendent vers l'avant (vu dans la direction d'avancement A), au-delà des axes (38 et 67, 68). Les points de fixation de ce câble (79) sur lesdits prolongements (85 à 88) se situent sensiblement à la même distance des axes (38 et 67, 68) respectifs. Par ailleurs, la longueur des câbles (79 et 80) est telle qu'ils puissent s'étendre autour de la partie latérale (3, 4) correspondante du châssis (1) dans la position de travail (voir la figure 6).

La machine décrite en liaison avec les figures 1 à 5 est destinée au fanage. Durant le travail elle est accouplée à un tracteur qui permet de la déplacer dans la direction (A). Les rotors (27 à 30) sont entraînés en rotation, autour de leurs axes supports (38) respectifs, de telle sorte qu'ils tournent deux à deux en convergence à l'avant (flèches F et F'). Lors de cette rotation, leurs fourches (37) ramassent sur la partie avant de leur trajectoire les végétaux qui se trouvent sur le sol, les entraînent vers l'arrière et les étalent à nouveau tout en provoquant leur retournement. Les différents rotors (27 à 30) peuvent suivre les dénivellations du sol en pivotant avec les parties correspondantes (2, 3 et 4) du châssis (1) autour des pivots (5 et 6). L'ensemble du châssis (1) peut aussi pivoter autour de l'axe d'articulation (14) avec le chevalet d'accouplement (15) afin que les rotors (27 à 30) puissent bien suivre le tracteur. Par ailleurs les deux tronçons (57, 58 et 59, 60) des tiges de commande (48 et 49) des axes supports (38) des rotors (29 et 30) des parties latérales (3 et 4) sont accouplés entre eux. Leurs axes d'accrochage (75) se situent alors dans les encoches (76).

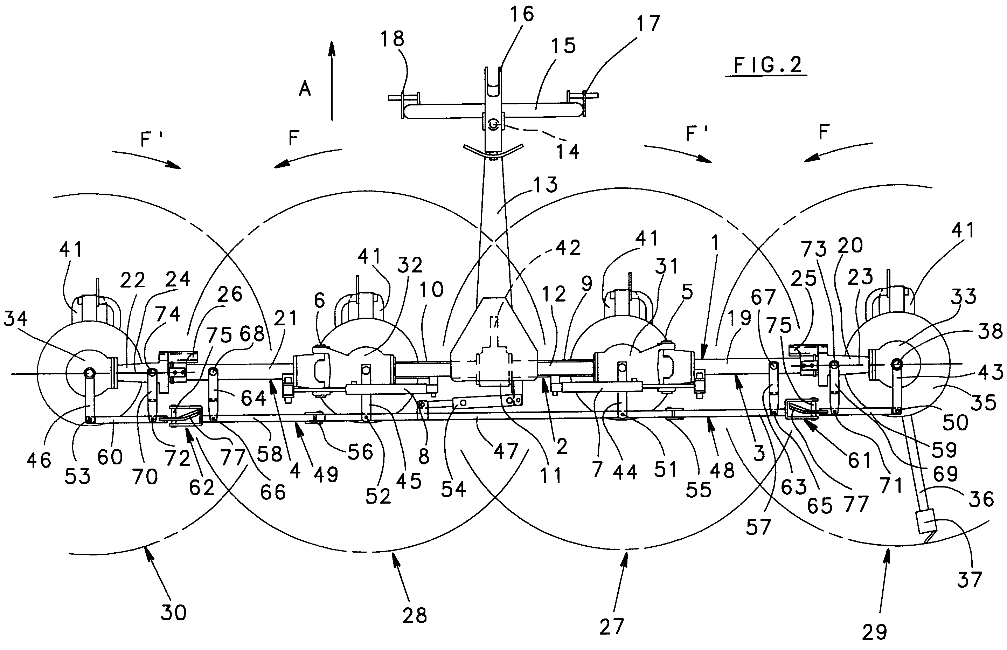

Dans la première position de travail qui est représentée sur les figures 1 et 2, le châssis (1) et les rotors (27 à 30) se situent sur une ligne sensiblement perpendiculaire au sens d'avancement (A). Lesdits rotors (27 à 30) projettent alors les végétaux dans la direction opposée au sens d'avancement (A), de telle sorte qu'ils retombent pratiquement sur la même bande de terrain. Les roues d'appui (41) sont bloquées dans une direction dans laquelle elles sont sensiblement perpendiculaires au châssis (1). Ce blocage est assuré au moyen du vérin hydraulique (54) qui bloque les tiges de commande (47, 48 et 49). Celles-ci bloquent à leur tour par l'intermédiaire des leviers (43 à 46) les axes supports (38) qui portent les roues (41). Il peut éventuellement être prévu un dispositif de bloquage mécanique supplémentaire disposé entre le châssis (1) et les tiges de commande (47 à 49) afin de mieux définir les différentes positions de ces dernières. Ce dispositif serait avantageusement commandé depuis le tracteur.

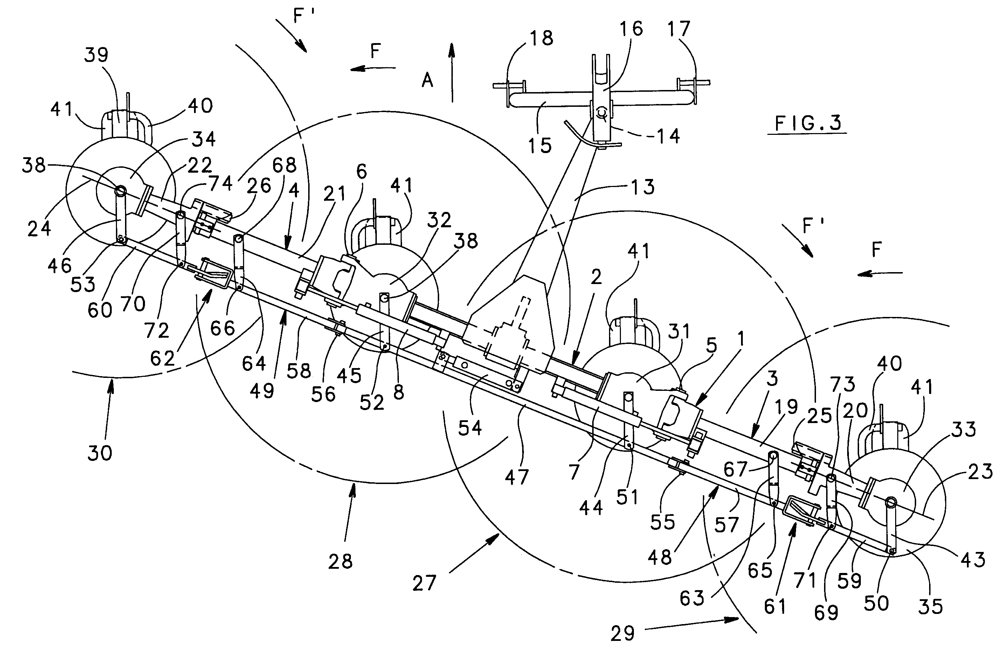

La machine peut être transposée dans la deuxième position de travail représentée sur la figure 3 en actionnant le vérin hydraulique (54) de telle sorte qu'il se raccourcisse. Il déplace alors les tiges de commande (47, 48 et 49) vers le côté droit de la machine. Celles-ci entraînent tous les leviers de réglage (43 à 46) qui font tourner les axes supports (38) sur eux-mêmes. Ces axes (38) orientent alors les roues d'appui (41) vers le côté gauche du châssis (1) jusqu'à ce qu'elles forment des angles d'environ 25° par rapport à leurs positions initiales. Toutefois, étant donné que ces roues d'appui (41) se placent automatiquement dans la direction d'avancement (A) lorsque la machine est déplacée, l'ensemble du châssis (1) tourne autour de l'axe d'articulation (14) du chevalet d'accouplement (15) et prend une position oblique par rapport à la direction d'avancement (A). Les rotors (27 à 30) se situent alors également sur une ligne oblique et ils déplacent les végétaux en biais par rapport à la direction d'avancement (A).

Pour revenir dans la première position de travail, il suffit de commander le vérin hydraulique (54) de sorte qu'il s'allonge et ramène les tiges de commande (47, 48 et 49), les leviers (43 à 46), les axes supports (38) et les roues d'appui (41) dans leurs positions initiales.

La machine peut également être transposée dans une troisième position de travail qui n'est pas représentée. Dans cette position le châssis (1) est incliné dans une position inverse à celle de la figure 3. Elle est obtenue en allongeant le vérin hydraulique (54) lorsqu'il est dans la première position de travail.

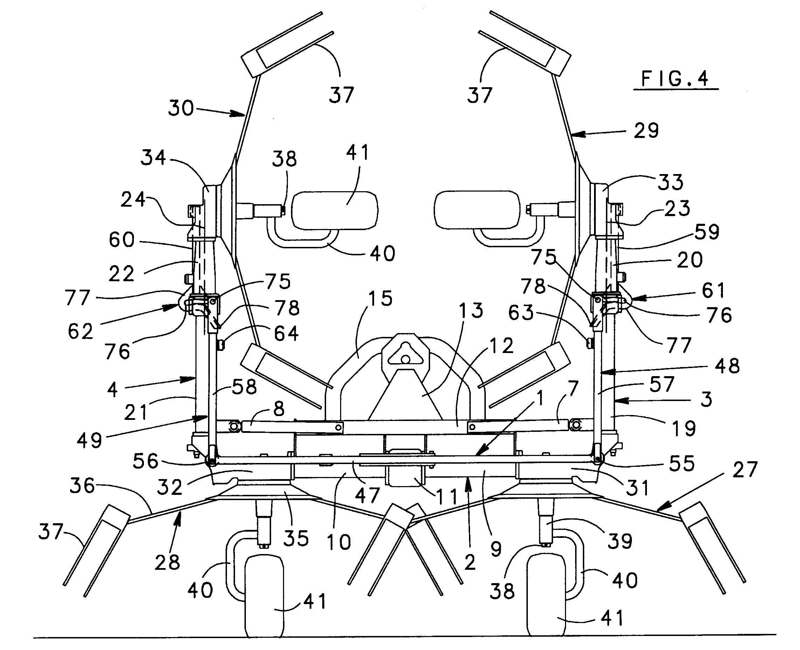

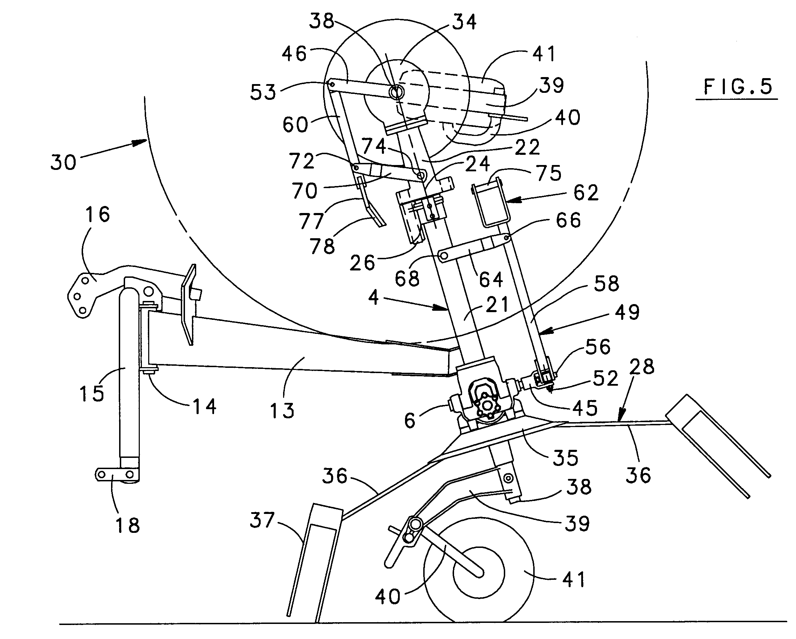

Pour mettre la machine en position de transport les parties latérales (3 et 4) du châssis (1) sont relevées dans une position sensiblement verticale au moyen des vérins hydrauliques (7 et 8). Ensuite, les segments extérieurs (20 et 22) de ces parties latérales (3 et 4) sont débloquées et tournées d'environ 180° autour de leurs axes longitudinaux géométriques (23 et 24) pour amener les rotors (29 et 30) correspondants au dessus de la partie centrale (2) avec les fourches (37) orientées vers le milieu de la machine. Au cours de cette rotation les deuxièmes tronçons (59 et 60) des tiges de commande (48 et 49) tournent avec lesdits segments extérieurs (20 et 22). Les plaques (77) avec les encoches (76) se détachent alors automatiquement des axes d'accrochage (75) des premiers tronçons (57 et 58) (voir figures 4 et 5).

Inversement, pour remettre la machine en position de travail il faut tourner les segments extérieurs (20 et 22) de manière à ramener leurs rotors (29 et 30) vers l'extérieur. Les plaques (77) des deuxièmes tronçons (59 et 60) reviennent alors vers les axes d'accrochage (75). Lorsque les rampes (78) rencontrent ces axes (75), elles ramènent les plaques (77) et les deuxièmes tronçons (59 et 60) dans la position dans laquelle les encoches (76) peuvent s'engager automatiquement sur lesdits axes (75). Dès lors la liaison entre les deux tronçons (57, 58 et 59, 60) de chaque tiges de commande (48, 49) est rétablie. Il est alors à nouveau possible de régler la position de travail tel que cela a été décrit précédemment. Enfin, les parties latérales (3 et 4) du châssis (1) peuvent être abaissées au moyen des vérins hydrauliques (7 et 8).

Il est possible de réaliser la machine selon l'invention de telle sorte que les déplacements en hauteur des parties latérales (3 et 4) et les pivotements de leurs segments extérieurs (20 et 22) soient combinés.

La machine selon l'exemple de réalisation de la figure 6 peut être transposée dans les mêmes positions de travail que celles décrites précédemment. Pour la transposer de la position de travail dans la position de transport et inversement, les parties latérales (3 et 4) du châssis (1) sont également déplacées en hauteur et leurs segments extérieurs (20 et 22) sont pivotés d'environ 180° avec les deuxièmes tronçons (59 et 60) par rapport aux segments intérieurs (19 et 21) et aux premiers tronçons (57 et 58). Toutefois, lors du pivotement des deuxièmes tronçons (59 et 60) des tiges de commande (48 et 49), les câbles (79 et 80) maintiennent constamment lesdits deuxièmes tronçons (59 et 60) dans les positions qu'ils occupaient au moment de la séparation d'avec les premiers tronçons (57 et 58). De ce fait, les encoches (76) de leurs plaques (77) se situent immédiatement au niveau des axes d'accrochage (75) lors du retour vers la position de travail, ce qui facilite le rétablissement de la liaison entre les deux tronçons (57, 58 et 59, 60). On comprendra que les extrémités des câbles (79 et 80) qui sont reliées aux segments extérieurs (20 et 22) des parties latérales (3 et 4) pivotent avec lesdits segments (20 et 22) lors de leurs déplacements.

Il est bien évident que l'invention n'est pas limitée aux modes de réalisation décrits et représentés sur les dessins annexés. Des modifications sont possibles, notamment en ce qui concerne la constitution des divers éléments ou par substitution d'équivalents techniques, sans sortir pour autant du domaine de protection défini par les revendications.

## Revendications

1. Machine de fenaison, notamment une faneuse de végétaux, qui peut être accouplée à un tracteur et qui comporte un châssis support (1) de forme allongée, se composant d'une partie centrale (2) et de deux parties latérales (3 et 4) qui sont articulées aux extrémités de ladite partie centrale (2) au moyen de pivots (5 et 6) autour desquels elles peuvent être déplacées en hauteur d'un angle d'environ 90° pour le transport, lequel châssis (1) porte plusieurs rotors (27 à 30) se situant sous la partie centrale (2) et les parties latérales (3 et 4) et pouvant être entraînés en rotation durant le travail autour d'axes supports (38) qui portent à leurs extrêmités inférieures des roues (41) d'appui au sol, chacune desdites parties latérales (3 et 4) étant réalisée en un segment intérieur (19, 21) et un segment extérieur (20, 22) qui porte le rotor (29, 30) correspondant et qui peut tourner autour de son axe longitudinal (23, 24) par rapport au segment intérieur (19, 21) pour amener ledit rotor (29, 30) sensiblement au-dessus de la partie centrale (2) avec les fourches de travail (37) orientées vers le milieu de la machine, lorsque lesdites parties latérales (3 et 4) sont déplacées en hauteur pour le transport, ***caractérisée par le fait que*** les axes supports (38) des rotors (27 à 30) sont montés pivotants dans des paliers du châssis (1) de la machine, que lesdits axes supports (38) comportent des leviers de réglage (43 à 46) qui sont reliés entre eux au moyen de tiges de commande (47, 48 et 49) et que les tiges de commande (48 et 49) des leviers de réglage (43 et 46) des axes supports (38) des deux rotors (29 et 30) des parties latérales (3 et 4) sont réalisées en un premier tronçon (57, 58) et un second tronçon (59, 60) qui sont munis de moyens (61 et 62) d'accouplement et de désaccouplement.

2. Machine selon la revendication 1, ***caractérisée par le fait que*** le premier tronçon (57, 58) de chaque tige de commande (48, 49) est articulé sur la tige de commande (47) qui relie les leviers (44 et 45) des axes supports (38) des rotors (27 et 28) de la partie centrale (2) et sur un levier de guidage ( 63, 64) qui est articulé sur le segment intérieur (19, 21) de la partie latérale (3, 4) correspondante du châssis (1).

3. Machine selon la revendication 1, ***caractérisée par le fait que*** le second tronçon (59, 60) de chaque tiges de commande (48, 49) est articulé sur le levier de réglage (43, 46) de l'axe support (38) du rotor (29, 30) de la partie latérale (3, 4) correspondante et sur un levier de guidage (69, 70) qui est sensiblement parallèle audit levier de réglage (43, 46) et qui est articulé sur le segment extérieur (20, 22) de la partie latérale (3, 4) du châssis (1).

4. Machine selon la revendication 2, ***caractérisée par le fait que*** le premier tronçon (57, 58) de chaque tige de commande (48, 49) comporte un axe d'accrochage (75).

5. Machine selon la revendication 4, ***catactérisée par le fait que*** l'axe d'accrochage (75) est dirigé dans la direction d'avancement (A).

6. Machine selon les revendications 3 et 4, ***caractérisée par le fait que*** le second tronçon (59, 60) de chaque tige de commande (48, 49) comporte une plaque (77) avec une encoche (76) dans laquelle peut se loger l'axe d'accrochage (75) du premier tronçon (57, 58) correspondant.

7. Machine selon la revendication 6, ***caractérisée par le fait que*** l'encoche (76) est en forme de V.

8. Machine selon la revendication 6 ou 7, ***caractérisée par le fait qu***'au moins un des bords de l'encoche (76) est prolongé et constitue une rampe de guidage (78).

9. Machine selon l'une quelconque des revendications précédentes, ***caractérisée par le fait que*** le levier de réglage (43, 46) de l'axe support (38) du rotor (29, 30) de chaque partie latérale (3, 4) du châssis (1) et le levier de guidage (63, 64) du premier tronçon (57, 58) de chaque tige de commande (48, 49) sont reliés entre eux par des câbles (79 et 80) placés dans des gaines de guidage (81 et 82) qui sont fixées à chacune de leurs extrémités sur des plaques (83 et 84) dont l'une (83) est solidaire du segment intérieur (19, 21) et l'autre (84) du segment extérieur (20, 22) de la partie latérale (3, 4) correspondante.

10. Machine selon la revendication 9, ***caractérisée par le fait que*** le levier de réglage (43, 46) et le levier de guidage (63, 64) comportent des prolongements (85 à 88) qui s'étendent au-delà de leurs axes (38 et 67, 68) respectifs, un (79) des câbles (79, 80) étant relié auxdits prolongements (85 à 88) qui se situent devant lesdits axes (38 et 67, 68) et l'autre câble (80) étant relié aux parties des leviers (43, 46, 63, 64) qui se situent derrière lesdits axes (38 et 67, 68) (vu dans la direction d'avancement A).

## Claims

1. Haymaking machine, especially a tedder for plants, which can be coupled to a tractor and which comprises a support chassis (1) of elongate shape, made up of a central part (2) and two lateral parts (3 and 4) which are articulated to the ends of the said central part (2) by means of pivots (5 and 6) about which they can be moved heightwise through an angle of about 90° for transport, which chassis (1) bears several rotors (27 to 30) situated below the central part (2) and the lateral parts (3 and 4) and which can be rotated during work about support axes (38) which at their lower ends bear wheels (41) for resting on the ground, each of the said lateral parts (3 and 4) being made of an inner segment (19, 21) and an outer segment (20, 22) which bears the corresponding rotor (29, 30) and which can rotate about its longitudinal axis (23, 24) with respect to the inner segment (19, 21) in order to bring the said rotor (29, 30) substantially above the central part (2) with the working forks (37) directed towards the middle of the machine when the said lateral parts (3 and 4) are moved heightwise for transport, ***characterized in*** that the support axes (38) of the rotors (27 to 30) are mounted so that they can pivot in bearings of the chassis (1) of the machine, in that the said support axes (38) comprise adjusting levers (43 to 46) which are connected together by operating rods (47, 48 and 49) and in that the operating rods (48 and 49) of the adjusting levers (43 and 46) of the support axes (38) of the two rotors (29 and 30) of the lateral parts (3 and 4) are made of a first portion (57, 58) and a second portion (59, 60) which are equipped with means (61 and 62) of coupling and uncoupling.

2. Machine according to Claim 1, ***characterized in*** that the first portion (57, 58) of each operating rod (48, 49) is articulated to the operating rod (47) which connects the levers (44 and 45) of the support axes (38) of the rotors (27 and 28) of the central part (2) and to a guide lever (63, 64) which is articulated to the inner segment (19, 21) of the corresponding lateral part (3, 4) of the chassis (1).

3. Machine according to Claim 1, ***characterized in*** that the second portion (59, 60) of each operating rod (48, 49) is articulated to the adjusting lever (43, 46) of the support axis (38) of the rotor (29, 30) of the corresponding lateral part (3, 4) and to a guide lever (69, 70) which is approximately parallel to the said adjusting lever (43, 46) and which is articulated to the outer segment (20, 22) of the lateral part (3, 4) of the chassis (1).

4. Machine according to Claim 2, ***characterized in*** that the first portion (57, 58) of each operating rod (48, 49) comprises a connecting pin (75).

5. Machine according to Claim 4, ***characterized in*** that the connecting pin (75) is directed in the direction of advance (A).

6. Machine according to Claims 3 and 4, ***characterized in*** that the second portion (59, 60) of each operating rod (48, 49) comprises a plate (77) that has a cut-out (76) in which the connecting pin (75) of the corresponding first portion (57, 58) can be housed.

7. Machine according to Claim 6, ***characterized in*** that the cut-out (76) is V-shaped.

8. Machine according to Claim 6 or 7, ***characterized in*** that at least one of the edges of the cut-out (76) is extended and constitutes a guide ramp (78).

9. Machine according to any one of the preceding claims, ***characterized in*** that the adjusting lever (43, 46) of the support axis (38) of the rotor (29, 30) of each lateral part (3, 4) of the chassis (1) and the guide lever (63, 64) of the first portion (57, 58) of each operating rod (48, 49) are connected to each other by cables (79 and 80) placed in guide sheaths (81 and 82) each of which sheaths is fixed at each of its ends to plates (83 and 84), one (83) of which is secured to the inner segment (19, 21) and the other (84) of which is secured to the outer segment (20, 22) of the corresponding lateral part (3, 4).

10. Machine according to Claim 9, ***characterized in*** that the adjusting lever (43, 46) and the guide lever (63, 64) comprise extensions (85 to 88) which extend beyond their respective axes (38 and 67, 68), one (79) of the cables (79, 80) being connected to the said extensions (85 to 88) which are located in front of the said axes (38 and 67, 68), and the other cable (80) being connected to the parts of the levers (43, 46, 63, 64) which lie behind the said axes (38 and 67, 68) (when viewed in the direction of advance A).

## Patentansprüche

1. Heuwerbungsmaschine, insbesondere ein Zetter für Pflanzengut, die an einem Traktor angekuppelt werden kann und einen langgestreckten Stützrahmen (1) aufweist, welcher einen Mittelteil (2) und zwei Seitenteile (3 und 4) umfaßt, die mittels Zapfen (5 und 6), um die sie für den Transport um einen Winkel von ca. 90° in der Höhe geschwenkt werden können, an den Enden des Mittelteils (2) angelenkt sind, wobei der Rahmen (1) mehrere Rotoren (27 bis 30) trägt, die sich unter dem Mittelteil (2) und den Seitenteilen (3 und 4) befinden und im Betrieb um Stützachsen (38), die an ihren unteren Enden Räder (31) zum Aufstützen auf den Boden tragen, drehangetrieben werden können, wobei jeder der Seitenteile (3 und 4) als ein Innensegment (19, 21) und ein Außensegment (20, 22) ausgebildet ist, das den dazugehörigen Rotor (29, 30) trägt und sich bezüglich des Innensegments (19, 21) um seine Längsachse (23, 24) drehen kann, um den Rotor (29, 30) im wesentlichen über den Mittelteil (2) zu bringen, wobei die Arbeitsgabeln (37) zur Mitte der Maschine ausgerichtet sind, wenn die Seitenteile (3 und 4) für den Transport nach oben geschwenkt sind, ***dadurch gekennzeichnet***, daß die Stützachsen (38) der Rotoren (27 bis 30) in Lagern des Rahmens (1) der Maschine schwenkbar angebracht sind, daß die Stützachsen (38) Einstellhebel (43 bis 46) aufweisen, die mittels Steuerstangen (47, 48 und 49) miteinander verbunden sind, und daß die Steuerstangen (48 und 49) der Einstellhebel (43 und 46) der Stützachsen (38) der beiden Rotoren (29 und 30) der Seitenteile (3 und 4) als ein erster Abschnitt (57, 58) und ein zweiter Abschnitt (59, 60) ausgebildet sind, die mit Mitteln (61 und 62) zum Ankuppeln und Abkuppeln versehen sind.

2. Maschine nach Anspruch 1, ***dadurch gekennzeichnet***, daß der erste Abschnitt (57, 58) jeder Steuerstange (48, 49) an der Steuerstange (47), die die Hebel (44 und 45) der Stützachsen (38) der Rotoren (27 und 28) des Mittelteils (2) verbindet, und an einem Führungshebel (63, 64) angelenkt ist, der an dem Innensegment (19, 21) des dazugehörigen Seitenteils (3, 4) des Rahmens (1) angelenkt ist.

3. Maschine nach Anspruch 1, ***dadurch gekennzeichnet***, daß der zweite Abschnitt (59, 60) jeder Steuerstange (48, 49) an dem Einstellhebel (43, 46) der Stützachse (38) des Rotors (29, 30) des dazugehörigen Seitenteils (3, 4) und an einem Führungshebel (69, 70) angelenkt ist, der im wesentlichen parallel zu dem Einstellhebel (43, 46) verläuft und an dem Außensegment (20, 22) des Seitenteils (3, 4) des Rahmens (1) angelenkt ist.

4. Maschine nach Anspruch 2, ***dadurch gekennzeichnet***, daß der erste Abschnitt (57, 58) jeder Steuerstange (48, 49) eine Anhängeachse (75) aufweist.

5. Maschine nach Anspruch 4, ***dadurch gekennzeichnet***, daß die Anhängeachse (75) in Fahrtrichtung (A) ausgerichtet ist.

6. Maschine nach den Ansprüchen 3 und 4, ***dadurch gekennzeichnet***, daß der zweite Abschnitt (59, 60) jeder Steuerstange (48, 49) eine Platte (77) mit einer Kerbe (76) aufweist, in der die Anhängeachse (75) des dazugehörigen ersten Abschnitts (57, 58) eindringen kann.

7. Maschine nach Anspruch 6, ***dadurch gekennzeichnet***, daß die Kerbe (76) V-förmig ist.

8. Maschine nach Anspruch 6 oder 7, ***dadurch gekennzeichnet***, daß mindestens einer der Ränder der Kerbe (76) verlängert ist und eine Führungsrampe (78) bildet.

9. Maschine nach irgend einem der vorhergehenden Ansprüche, ***dadurch gekennzeichnet***, daß der Einstellhebel (43, 46) der Stützachse (38) des Rotors (29, 30) jedes Seitenteils (3, 4) des Rahmens (1) und der Führungshebel (63, 64) des ersten Abschnitts (57, 58) jeder Steuerstange (48, 49) durch Seile (79 und 80) untereinander verbunden sind, die in Führungshülsen (81 und 82) angeordnet sind, welche an jedem ihrer Enden an Platten (83 und 84) befestigt sind, von denen eine (83) mit dem Innensegment (19, 21) und die andere (84) mit dem Außensegment (20, 22) des dazugehörigen Seitenteils (3, 4) fest verbunden ist.

10. Maschine nach Anspruch 9, ***dadurch gekennzeichnet***, daß der Einstellhebel (43, 46) und der Führungshebel (63, 64) Verlängerungen (85 bis 88) aufweisen, die sich über ihre jeweiligen Achsen (38 und 67, 68) hinaus erstrecken, wobei eines (79) der Seile (79, 80) mit den Verlängerungen (85 bis 88), die sich vor den Achsen (38 und 67, 68) befinden, und das andere Seil (80) mit den Teilen der Hebel (43, 46, 63, 64), die sich hinter den Achsen (38 und 67, 68) befinden (mit Blickrichtung in Fahrtrichtung A), verbunden sind.
